# EUROPEAN PATENT APPLICATION

(11) **EP 0 690 639 A2**
(43) Date of publication of application: **03.01.1996**
(21) Application number: 95304508.5
(22) Date of filing: 27.06.1995
(51) Int. Cl.: H04Q 7/22, G01W 1/02

(54) **Method for connecting a weather station to a mobile phone network**

(30) Priority: 27.06.1994 FI 943090
(71) Applicant: VAISALA OY, FI-00421 Helsinki (FI)
(72) Inventor: Inha, Kai, FI-04430 Jarvenpaa (FI); Nylander, Pauli, FI-00430 Helsinki (FI)
(74) Representative: Dempster, Benjamin John Naftel

(57) **Abstract**

The invention relates to a method for connecting a weather station (2) which is capable of measuring at least two of the following variables related to the ambient weather conditions at the weather station (2): wind direction, wind speed, air temperature, ground temperature, atmospheric pressure, air relative humidity, ground humidity, visibility, precipitation, precipitation type, prevailing weather, cloud height, noise, vibration, air radioactivity, solar radiation, air contaminants and road surface weather conditions. According to the invention, the weather station (2) is placed in the immediate vicinity of a base station (1) of a digital mobile phone network utilizing the existing power supply system (7) and mast structures, and weather data is transferred to the user (9) via the digital mobile phone network.

## Description

The present invention relates to a method according to the preamble of claim 1 for connecting a weather station.

Conventionally, weather stations are mounted as self-contained units in a most favourable weather-monitoring position on a mast or pole. The different types of sensors are fixed at their correct measurement levels relative to the ground or disturbing structures. Such a weather station also needs an energy source and a communications connection. Furthermore, a self-contained weather station frequently requires fixed mast structures and possibly a fence to prevent trespassing. Also the lightning protection and grounding of the mast and the weather station must be arranged.

Several alternatives are known for implementing the energy supply of the weather station:
A battery of sufficient capacity has been used as the energy source. The battery has been replaced and charged at constant intervals. High costs are involved with the short maintenance/charging intervals.
Alternatively, a mains supply has been used combined with a transformer for reducing the voltage to a suitable level for the weather station. This arrangement requires cabling for the energy feed, an energy tariff meter, transient over-voltage protections, groundings, enclosures and fuses. Significant costs are also caused by the installation works. As continuous, uninterrupted mains supply cannot be guaranteed as a rule, the weather station must be provided with a backup battery and its charging electronics.
Also known in the art are solar-energy-supplied systems equipped with a battery and charging electronics for controlling energy storage. In the design of such a system, the matters to be considered are the wind loads on the planar solar panels and the scheduled maintenance of the panels. One problem is related to long overcast seasons which may restrict the energy supply.
Also systems based on wind energy have been used. Such a system also requires a battery and its charging electronics. The wind generator has a complicated mechanical construction subject to abrasion and requires a great amount of maintenance.

Several methods of implementing the communications are also known:
A fixed line between the weather station and the operator is possible only over short ranges. Here, the maximum distance is typically in the order of a few hundred meters, a few kilometers at most. The shortcomings of a fixed line include the feasibility, high price, transient overvoltage protection and high fault rate of a cable connection.
Also a dialled telephone line and a modem can be used for data transfer. The problems hereby include the local requirements of telephone network operators for using type-tested modems, sluggish call switching (from several seconds to tens of seconds per station), low reliability and high vulnerability. Data collection simultaneously from multiple stations is extremely clumsy.
In turn, a private radio link requires operating permits from the authorities on a different basis in each country. This implementation is expensive and frequently requires the erection of a separate base station. Erection of link networks is costly and awkward. Radio communications over spans of tens of kilometers require considerable transmission power levels, which concomitantly increases the size of the system power supply and the backup battery possibly used.
Finally, a satellite connection is almost invariably a unidirectional and expensive alternative. It requires a separate transmitter that must be operated under official permits according to local regulations in each country. The installation and operating costs are high.

It is an object of the present invention to overcome the disadvantages of the above-described prior-art techniques and to achieve an entirely novel method of connecting a weather station.

The goal of the invention is accomplished by adapting the weather station to operate in conjunction with the base station of a digital mobile phone network, such as a GSM network base station, or in the immediate vicinity thereof, and then transferring the weather data via the digital mobile phone network to the weather station operator using the transmit/receive antenna of the mobile phone network. In a preferred embodiment of the invention, the weather station is adapted to utilize the energy supply system and mast constructions of the communications network base station.

More specifically, the method according to the invention is characterized by what is stated in the characterizing part of claim 1.

The invention offers significant benefits.

As the base station network of a digital mobile phone system is extremely dense, the density of the weather station network may be increased at a relatively low cost. Hence, the problems associated with the erection of data transfer communications hampering conventional weather station systems can be bypassed. According to a preferred embodiment of the invention, the availability of electrical energy is preassured. The digital communications network facilitates error-free and extremely fast data transfer to be exploited by, e.g., weather-monitoring institutions/authorities (including The Weather Institute, The Road Authority and the authorities responsible for aviation safety). The operating costs of the communications network may also be covered by offering the subscribers of the digital mobile phone network against a charge the possibility of calling weather data from desired areas onto the display of the mobile phone. Furthermore, the advantageous densification of the weather station network offers the possibility of still more exacting weather forecasts. Accordingly, the improved weather forecast services could be exploited, e.g., at reacreation locations by users wanting to check the most favourable sailing winds particularly on their own beaches from the dense weather-monitoring network implemented in the method according to the present invention.

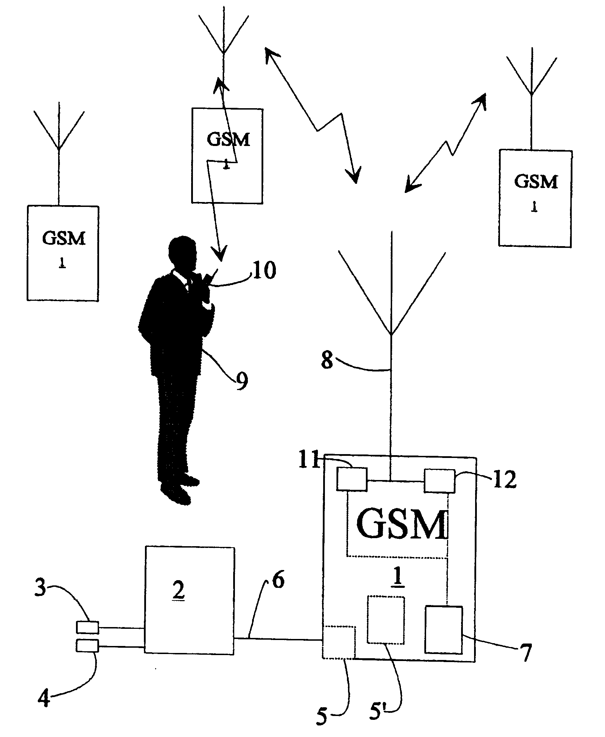

The invention is next examined in greater detail with the help of an exemplifying embodiment illustrated in the appended drawing.

The weather station 2 of the drawing refers to such a weather station which is capable of measuring at least two of the following variables: wind direction, wind speed, air temperature, ground temperature, atmospheric pressure, air relative humidity, ground humidity, visibility, precipitation, precipitation type, prevailing weather, cloud height, noise, vibration, air radioactivity, solar radiation, air contaminants and road surface weather conditions.

Referring to the diagram, a connection method according to the invention is shown. A digital mobile phone base station 1, e.g., a GSM network base station comprises an antenna 8 for transmitting and receiving signals in digital format between other base stations 1 and the mobile phones 10 of the network subscribers 9. The base station 1 typically incorporates a transmitter 11 and a receiver 12 and a power supply 7 feeding electricity to these units, whereby the power supply is typically implemented as a mains-fed unit including a transformer and a backup battery. Furthermore, the weather station 2 incorporates at least two sensors 3 and 4, which may be a humidity sensor and a temperature sensor, for instance. Typically, the weather station 2 has a plurality of the sensors 3 and 4 measuring said variables. According to the invention, the weather station 2 is connected via a cable 6 to the communications network base station for transferring the weather data measured by means of the sensors 3 and 4 to the base station 1 and therefrom in digital format further via the antenna 8 to the other base stations 1 and the mobile phones 10. The antenna 8 may also be used for bidirectional transfer of the control signals of the weather station 2. Such communications may comprise, e.g., the updating of the program data of the weather station 2. If the cable 6 is also used for energy transfer to the weather station 2, the cable 6 is typically a single galvanic conductor, whereby the energy is transferred in the form of a DC voltage. The electrical power consumption of a weather station is 1/10 - 1/100 of the power consumption of the communications network base station. Accordingly, the weather station 2 may advantageously be connected to the protected power supply system 7 of the base station 1. For transient overvoltage protection, the cable 6 may be equipped with required transient suppression components. To make the weather station 2 communications compatible with base station 1, the system must be provided with a suitable interface 5 and/or compatible software 5' capable of converting the information transferred to the standard interface of the GSM network base station into suitable form for further transmission in digital format to the network subscriber 9.

A GSM mobile phone 10 equipped with separately allocated user rights may be used for selectively retrieving measurement data from a desired weather station to the display of the mobile phone 10 provided that the software and interfaces of the GSM network base station 1 and the mobile phone 10 are adapted to support such functions. This data retrieval could be implemented by, e.g., calling a given telephone number, whereby the GSM system brings the desired data directly onto the display of the mobile phone 10 so that the subscriber 9 has the possibility of scrolling the data and storing them, if required, in the memory of the mobile phone 10 depending on the properties of the mobile phone.

Meteorological institutions can still improve the services by feeding weather data collected and processed from the communications network base stations to the GSM network for use by the subscribers. Such functions could comprise, e.g., certain service numbers giving local weather forecasts which by virtue of the method according to the invention can be drafted with extreme precision in terms of both quality and time. According to the invention, also an automatically updated call connection can be arranged in which call either the base station 1 or the mobile phone 10 can be the calling party of the scheduled connection.

As the GSM system facilitates direct data transfer between a computer and a phone, the phone can be used for data collection and transfer directly to the computer of the measurement data user 9.

In the context of the present invention, the immediate vicinity of the weather station 2 to the base station 1 refers to a distance which is smaller than 50 meters.

## Claims

1. A method for connecting a weather station (2) which is capable of measuring at least two of the following variables related to the ambient weather conditions at the weather station (2): wind direction, wind speed, air temperature, ground temperature, atmospheric pressure, air relative humidity, ground humidity, visibility, precipitation, precipitation type, prevailing weather, cloud height, noise, vibration, air radioactivity, solar radiation, air contaminants and road surface weather conditions,
**characterized** in that
- the weather station (2) is placed in the immediate vicinity of a base station (1) of a digital mobile phone network, and
- weather data is transferred to the user (9) via the digital mobile phone network.

2. A method as defined in claim 1, **characterized** in that the weather station (2) utilizes the protected power supply system (7) of the base station (1).

3. A method as defined in claim 1, **characterized** in that the digital mobile phone network is utilized for controlling the weather station (2).
